# EUROPEAN PATENT SPECIFICATION

(11) **EP 3 132 976 B1**
(45) Date of publication and mention of the grant of the patent: **03.04.2019**
(21) Application number: 15181257.5
(22) Date of filing: 17.08.2015
(51) Int. Cl.: B60R 9/04

(54) **ROOF RACK COMPRISING A LOAD SENSOR**
DACHGEPÄCKTRÄGER MIT LASTSENSOR
GALERIE DE TOIT COMPRENANT UN CAPTEUR DE CHARGE

(43) Date of publication of application: 22.02.2017
(60) Divisional application: 19157691.7
(73) Proprietor: Thule Sweden AB, 330 33 Hillerstorp (SE)
(72) Inventor: Ferman, Magnus, 33154 Värnamo (SE)
(74) Representative: Wallentin, Lars

(56) References cited:
- EP-A1- 1 652 580
- EP-A2- 0 812 729
- DE-A1-102004 031 224

## Description

### TECHNICAL FIELD

A load carrier having a vehicle attachment portion such as a load carrying foot and a load carrying portion such as a load carrying bar. The vehicle attachment portion and the load carrying portions are provided with at least one sensor.

### BACKGROUND

During attachment of a load carrier foot of the clamp rack foot type, which uses a clamping force as primary attachment principle to the roof of the vehicle, the load carrier foot rests on the roof and a grip member engages a ledge on the vehicle. The grip member is thereafter forced in a direction so as to impart a clamping force between the grip member and the support surface by means of attachment arrangements, such as a screw, which retains the load carrier foot on the roof of the vehicle. This type of load carrier foot is advantageous as it can be applied to many different types of vehicles and it requires little or no manipulation of the vehicle itself, in contrast to a fix point foot.

A fix point foot is a type of load carrier foot is attached on pre prepared positions on the vehicle, which generally do not need to be attached using a clamping force as primary attachment principle but rather a screw arrangement. Fix point foot use a predetermined position, a fixed point, on the vehicle prepared by the vehicle manufacturer during production of the vehicle. Such a fix point, or pre prepared position, can be a nut like member arranged on the chassis of the vehicle as illustrated in the publication of SE 508 709 C2 for example.

It may be difficult however for a user to know if the load carrier foot is properly attached to the vehicle. Especially in the light of that there are different types of load carrier feet on the market. It may further be difficult for a user to know if the load carrier has been overloaded, i.e. loaded with an inappropriate amount of load with respect to safety regulations or national laws. There is thus a need for a load carrier which can assist a user to determine whether the load is properly loaded, or if the load carrier is overloaded.

DE 10 2004 031224 A1 discloses a roof rack, having a sensor, where the sensor is adapted to measure the weight of the load as the sensor is positioned between the roof rack and the car or alternatively the roof rack foot and the load carrying bar. It further discloses that the sensors may be connected to an evaluation device having a control unit, which may control a signaling device, such as a horn, in order to output an audible warning signal, and/or the control unit may cause a dashboard display in the vehicle to present the measured data to the driver of the vehicle.

EP 0 812 729 A2 discloses a roof rack having a sensor positioned on a roof rail, which is adapted to detect the bending of a roof rail along its longitudinal axis. It further discloses that the sensor may be connected to a signal generator via an electrical cable, where the signal generator is arranged on the vehicle dashboard.

### SUMMARY

It is an object of the present invention to provide a load carrier which reduce the drawbacks, or which provide for a useful alternative. The objective is met by a load carrier according to claim 1.

The load carrier may comprise at least two sensors wherein one sensor is located on said at least one vehicle attachment portion and one sensor on said load carrying portion or two sensors on said load carrying portion or said vehicle attachment portion.

The sensors may be of the same kind or different kinds, e.g. one pressure sensor and one strain gauge.

The at least one vehicle attachment portion is at least one load carrier foot, preferably a first and a second load carrier foot. The load carrying portion is preferably a load carrying bar. The load carrier is preferably a roof rack.

The at least one sensors provide the user with important data about the load and the load carrier such as a safety receipt that the load carrier is properly mounted to the vehicle, data concerning the load such as the measured load, the positioning of the load. It offers the possibility to connect the sensors with the vehicle itself, and more precisely with the vehicle systems, which in turn can be communicating with remotely located data servers.

According to the invention, the load carrier comprises a communication unit for communicating with an electronic device, wherein the electronic device may be one or more electronic devices selected from the list of; a hand held electronic device such as mobile phone, smart pad, lap top or the like, a desk top computer, a database server. The communication unit is a wireless transmitter. The transmitter may be adapted to communicate with the vehicle and/or with a hand held communication device. This gives the load carrier a great flexibility to provide a user with a lot of data concerning the measured values from the sensors. It also enables the measured values to be compared with reference values.

The load carrier may comprise a processing unit for processing a received signal from the at least one sensor(s) or from an electronic device communicating with the load carrier. It may also be provided with a memory unit for storing information. The processing unit may be positioned in the load carrying portion or in the vehicle attachment portion. If the load carrying portion is a load carrying bar, the processing unit may be positioned inside of the load carrying bar for example. If the vehicle attachment portion is a load carrier foot, the processing unit may be arranged inside of at least one of the load carrier feet.

The least one sensor may be is at least one sensor selected from the list of; a strain gauge sensor, a magneto elastic sensor, a pressure sensor, a temperature sensor, fiber optic sensor, accelerometer, lock sensor, accessory attachment sensor, contact sensor. The lock sensor may be configured to detect properly secured system e.g. that the load carrier foot is properly locked to the vehicle. It may be a lock cylinder sensor for example detecting if the key has been removed from the lock cylinder or if the lock cylinder is in a lock position. The accessory attachment sensor may be adapted to detect if any accessory is attached and/or whether it is properly attached or not, to the load carrying bar, or to the load carrying portion of the load carrier.

The at least one sensor, e.g. if being a contact sensor, may indicate proper contact between components, e.g. between the load carrying bar and an accessory, or between the load carrying bar and the load carrier foot, or between a lid and a base if the load carrying portion is roof box for example. When parts of contact sensors meet, they can generate another response to e.g. a wireless signal than when separated from each other, avoiding the need for power supply to these sensors. The contact sensors may be RFID based, radio frequency identification technology based, for example. Generally, the at least one sensor may be a RFID sensor.

The at least one sensor on the load carrier, such as a load carrying bar, and accessories such as ski carriers, bike carriers, roof boxes etc. could have unique identifiers. To ensure that input is only from the at least one sensor on one vehicle, the electronic device adapted to communicate with the load carrier, and thus the at least one sensor, could have a pairing functionality, e.g. a user presses a button on a ski carrier to pair it with a central logic/processing unit of the load carrier, e.g. of a load carrying bar.

The load carrying portion may be a load carrying bar. The at least one sensor of the load carrying portion may thus be arranged inside of the load carrying bar. The at least one sensor may be attached to an interior surface of the load carrying bar for example, such as an upper or lower interior surface of the load carrying bar. Optionally or additionally the at least one sensor may be attached underneath the load carrying bar, i.e. on the underside of the load carrying bar. Some sensor may be attached on the load receiving surface of the load carrying bar.

The load carrying portion may comprise at least two strain gauges (G1a-G1g), preferably equally distributed along the load carrying portion. The load carrying portion may also comprise at least three strain gauges, preferably with one positioned substantially in the middle of the load carrying portion, and the remaining two on either side of the middle strain gauge. If the load carrying portion is a load carrying bar, and the vehicle attachment portion is a first and a second load carrying foot, the two remaining strain gauges on either side of the middle strain gauge are preferably closer to the load carrier feet. In an embodiment, a first and a second strain gauge is positioned a first distance from an associated load carrier foot, while being at least 1,5 times that distance from the middle strain gauge.

The load carrying portion and/or the vehicle attachment portion may comprise two or more sensors, preferably three or more sensors, preferably three sensors. It has been found that when having three or more sensors a linear response from the measured item, e.g. the load carrying bar, is not required. The system thus becomes more robust and can be better calibrated, one to one relation in readings.

The load carrier and the at least one sensor may be adapted to be calibrated. The calibration may preferably be done as a function of temperature.

The load carrier may be provided with strain gauges as at least one sensor on the load carrying bar. The tension from the load put on the load carrying bar may thus be measured. Optionally it may be treated in an algorithm script which may compensate or calibrate for temperature, pre-tightening and/or displacement effects. This may assist in calculating or estimating the actual load, e.g. in kilograms, on the load carrying bar. The input from the at least one sensors may transferred by a transmitter to an electronic control unit, a display unit, a processor or the like.

According to an aspect, at least one sensor of the load carrying portion such as a load carrying bar, may be specifically calibrated with respect to the vehicle attachment portion such as a specific load carrier foot or a specific set of load carrier feet. It is believed that dimensions, angles or lengths of a unique load carrier foot may influence the behaviour of the sensors. It may thus be advantageous to calibrate a sensor of the load carrying portion with respect to a unique load carrier foot, or set of load carrier feet.

According to an embodiment, the vehicle attachment portion is a vehicle attachment portion which is adapted to be attached to the vehicle by a user, and in that the vehicle attachment portion comprises a torque limiter. A torque limiter is adapted to limit the amount of transferable torque from a user to the vehicle attachment portion, e.g. an attachment arrangement of a load carrier foot, to prevent a user from impart to high torque which accidentally could damage the load carrier foot, or the vehicle. It is preferred that the load carrying portion is a load carrier foot comprises a torque limiter for limiting the amount of transferable torque from a user. It ensures that each vehicle attachment portion, such a first and a second load carrier foot, is attached with the same, or substantially the same, amount of torque. It has been found that this provides a more consistent sensor reading and eases the calibration if such step is present.

According to an aspect it herein disclosed a load carrier for transporting a load on a vehicle, the load carrier comprising a load carrying bar, a first and a second load carrier foot, the load carrying comprising at least one sensor, and the first and the second load carrying foot comprising an attachment arrangement having a torque limiter, limiting the amount of torque transferable by a user when attaching the load carrier feet to the vehicle. A suitable torque limiter is disclosed in the international patent application no. WO 2010/088971 or in WO 2014/096327.

Generally a torque limiter comprises a connection member for connecting to connection member, e.g. in the form of a screw comprising threads. A head portion comprising a first and a second member is arranged to the connection member. The head portion further comprises a torque limiter, or a torque limiting mechanism, operable between the first and the second members of the head portion. The first member generally has a grip friendly configuration or a shape forming a handle. The first member is generally displaceable with respect to the second member. The head portion can sometimes be extendable providing a user with a better and more comfortable grip about the head portion. It is believed that a better and more comfortable grip enables a user to easier rotate the head portion, and thus the connection member. The first and the second members may be connected together by means of a slip connection or friction connection, which permits the first member to be slid with respect to the second member. The first member slides after a friction threshold value has been reached, and thus prevents a user from imparting more torque between the first and the second member. It may, but does not necessarily, provide the user with a signal, the signal can be visual, audial or tactile, or combinations thereof such as tactiovisual, audiovisual, tactioaudial or the like, and/or optionally the torque limiter can simply operate as a torque limiter only, preventing a torque threshold level to be exceeded.

According to an aspect, the at least one sensor of the load carrying portion and/or the vehicle attachment portion, may be reset by a user. The load carrier may be provided with a tare function. It has been found that it is advantageous with a tare function as a user can determine when the load carrying portion is empty from load, or substantially empty from a load. The load carrier may thus have the function such that the unladen weight may be subtracted from the laden weight to determine the weight of the load carrier, i.e. the net weight. In a similar manner, the sensors may be adjusted for instance if the user wishes to add theoretical weight to the sensors. The load carrier may thus be provided with an imaginary weight of e.g. 5 kg load, just to prevent the load carrier from being over loaded in a specific region having extra restrictions for example.

According to an aspect, input from two, four or more sensors, preferably from six senors, is used for determining a load center of gravity. This can be determined by e.g. the processing unit or electronic device.

The load carrier comprises a communication unit adapted to communicate with an electronic device. The communication unit is configured to transmit and receive data to and from the electronic device, preferably for improved calibration of at least one sensor. The at least one sensor may be on the load carrying portion and/or the vehicle attachment portion.

According to an aspect, the vehicle attachment portion may be a first and a second load carrier foot, and the load carrying portion may be a load carrying bar. The load carrier may further comprise a processing unit, a communication unit, and a hand held electronic device adapted to communicate with the load carrier.

According to an aspect, the load carrying portion may be a load carrying bar. The load carrying bar may comprise at least one designated channel or cut out for at least one sensor. Preferably, the designated channel or cut out is adapted to receive a support strip comprising a plurality of sensors or a cable. The channel or cut out is then specifically configured so that the support strip snugly fits. The load carrying bar may be provided with specifically adapted pockets for the at least one sensor.

According to an aspect, measurements of the at least one sensors can be triggered from an electronic device. This can be done by sending a signal to the load carrier, or e.g. a processing unit of the load carrier to request a sensor reading. This could trigger a submission of a wired or wireless scanning signal to sensors in the vicinity of a transmitter for example. By having triggered measurements it is believed that energy can be saved. Hence it is disclosed herein a load carrier comprising a vehicle attachment portion and a load carrying portion, and at least one sensor, wherein the at least one sensor is adapted to take at least one measurement upon request by a user via a hand held electronic device or via an on-board vehicle computer. The vehicle attachment portion preferably comprises at least one sensor and the load carrying portion preferably comprises at least one sensor.

It is also within the boundaries of the present invention to provide a set of at least a first and a second load carrier, each preferably comprising a load carrying bar and a first and a second load carrier foot, wherein the first load carrier can communicate with the second load carrier. The second load carrier may operate as a slave to the first load carrier for example in terms of that he second load carrier communicate with the first load carrier and the first load carrier communicates with the vehicle to which the set of load carriers are attached to, or to a remote location such as a remote data base.

According to an aspect, a processing unit and a transmitter may be arranged in each load carrying bar and communicate directly or via a network with an external electronic device. One load carrying bar may be a master and a second load carrying bar may be a slave to the master load carrying bar. The master load carrying bar may have at least one, or two or more slave load carrying bars.

According to an aspect, the present invention also relate to a support strip comprising a plurality of sensors. The support strip is attachable to a load carrier, such as a roof rack comprising a load carrying bar and a first and a second load carrier foot, to enable the attachment and positioning of the plurality of sensors at predetermined positions on the load carrier. This enables an easy manufacture assembly of the load carrier, or an easy assembly by a user.

The support strip may be releaseably attached to the plurality of sensors. This enables the support strip to be removed from the load carrier after the plurality of sensors have been attached thereto.

It should be noted that although features are described with respect to a load carrying bar they are applicable on a load carrying portion of a load carrier. Likewise, features described with respect to a load carrier foot, are equally applicable on the vehicle attachment portion of a load carrier.

### BRIEF DESCRIPTION OF THE DRAWINGS

Non-limiting embodiments of the present invention will be described in greater detail with reference to the accompanying figures in which;
figure 1 shows a load carrier foot and parts of a load carrying bar of a load carrier;
figure 2 shows a schematic figure of a load carrier comprising sensors;
figures 3a-3c shows a cross section of a load carrying bar according to an embodiment;
figure 4 shows a layout of a strain gauge sensor;
figure 5a-5b shows different positions of sensors on a load carrying bar and;
figure 6 shows the grip member of the load carrier foot of figure 1 in greater detail.

### DETAILED DESCRIPTION OF PREFERRED EMBODIMENTS

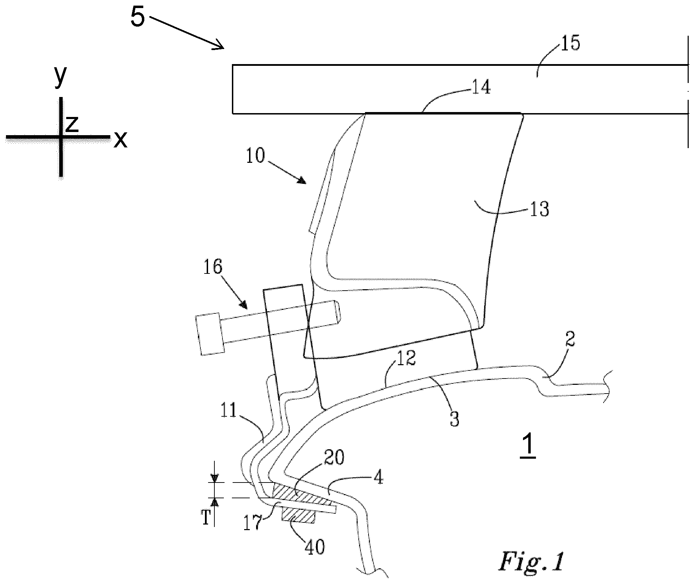

Figure 1 shows parts of a vehicle 1 with a roof 2 and portions of a roof rack 5. The roof 2 comprises a resting surface 3 for a clamp rack load carrier foot 10, hereafter referred to only as a load carrier foot. A ledge 4 of the vehicle 1 is adapted to provide for a grip surface to a grip member 11 of the load carrier foot 10. The load carrier foot 10 comprises a grip member 11 adapted to grip the ledge 4 in a retaining manner and together with a support surface 12 of the load carrier foot 10 provide a clamping force there between. The load carrier foot 10 comprises a body 13 having a load carrying bar receiving surface 14 onto which a load carrying bar 15 is positioned so as to form a vehicle roof rack arrangement together with a second load carrier foot (not shown). The load carrying bar and the load carrying foot 10 form a load carrier having a vehicle attachment portion and a load carrying portion. In this case the vehicle attachment portion is the load carrier foot 10 and the load carrying portion is the load carrying bar 15.

The body 13 of the load carrier foot 10 is the portion of the load carrier foot which is structurally configured to carry the weight of the load positioned on the load carrying bar 15 and may be formed by one or more individual parts. The load carrying bar 15 extends across the roof 2 of the vehicle 1 and substantially between the longitudinal sides (not shown) of the vehicle 1 in a direction transverse to the longitudinal direction of the vehicle. An adjustment arrangement 16, or tensioning arrangement, is adapted to adjust the position of the grip member 11 with respect to the body 13 so as to adjust the clamping force between the grip member 11 and the support surface 12 of the load carrier foot 10. The grip member 11 of the load carrying foot 10 comprises a grip portion 17 which is adapted to grip the ledge 4 in a retaining manner.

The support surface 12 can be formed directly by the body 13 or optionally be formed, or complemented, by a flexible friction enhancing material such as a rubber material or rubber like material, nevertheless, it can be said that the body 13 comprises a support surface. The body 13 provides structural integrity to the load carrier foot 10 to enable load to be positioned on the load carrying bar 15.

Figure 1 further defines the X, Y and Z directions used herein. The Z direction extends in the same direction as the width of the load carrying bar 15, and the forward and rearward directions of the vehicle 1 after the roof rack 5 has been assembled thereto. The X direction extends in the same direction as the longitudinal direction of the load carrying bar 15, and the transverse direction of the vehicle 1 after assembly thereto. The Y direction extends in the same direction as the height, or the vertical direction of the load carrying bar 15 or the vehicle 1. The Z-X directions form a horizontal plane, when the vehicle is parked or is travelling on flat ground.

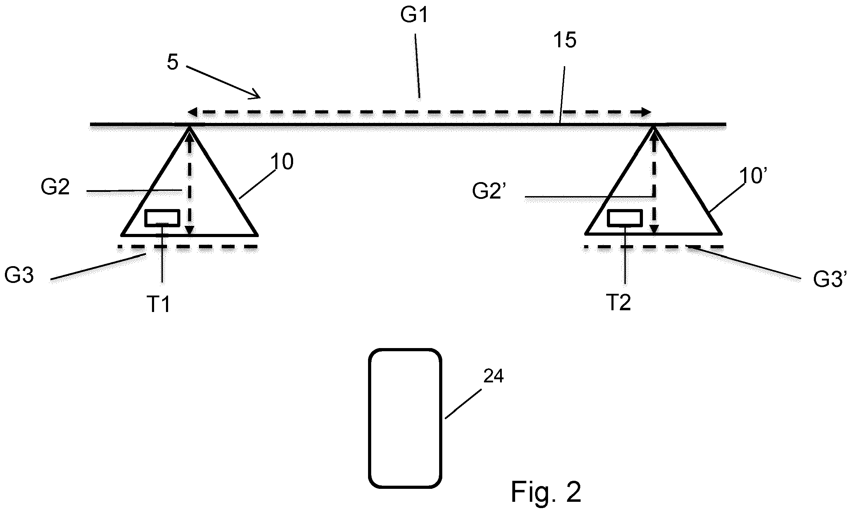

Figure 2 shows a schematic view of the roof rack 5 comprising the load carrying bar 15 and a first and a second load carrying foot 10, 10'. The first and the second load carrying foot 10, 10' are of the same type but could of course be of different types if desirable. With reference to figure 2, the different types of sensors and the cooperating units will be described in greater detail.

G1, represented by the dashed arrow, is a first sensor in this case a strain gauge. The first sensor G1 is adapted to measure the load applied to the load carrying bar 15, e.g. the weight of a roof box, furniture, ski carrier, bicycle or similar.

The measured load, or the measured value, may be used in different ways. For example, the actual value may be transmitted to a display device 24 for example. Optionally or additionally the measured value may be compared with a stored value representative of a maximum weight permitted on the load carrying bar 15, and a green or red light may be displayed on the display device 24 for example. Additionally or optionally provide the load distribution as a function of the length and area, e.g. approximated by length x width, of the load carrying bar. This can be done by presenting a graphical representation over an area spanned by the cross bars, indicating the load distribution to the user, possibly indicating an uneven load distribution and specific problematic locations.

The measured value from the first sensor G1 may be transmitted via a transmitter T1, T2. In the shown embodiment each of the load carrying foot 10, 10' comprises a transmitter T1, T2. With the transmitters T1, T2 may an energy supply unit be provided. The energy supply unit may be adapted to support or power the first sensor G1 if desirable.

The display device 24 may be a mobile phone, a lap top, a desk top, a vehicle display unit or the like. The transmitter may be a wireless transmitter. The energy supply unit may be a battery, an energy harvesting device or a battery with a harvesting device. A suitable energy harvesting device may be a solar cell for example.

Optionally or additionally at least one of the load carrying foot 10, 10' may be provided with a second and/or a third sensor G2, G3, G2', G3'. In the shown embodiment the first and the second load carrying foot 10, 10' comprises two sensors each. The first load carrying foot 10 comprises a second and a third sensor G2, G3 and the second load carrying foot 10' comprises a fourth and a fifth sensor G2', G3'. Hereafter only one of the load carrying feet 10, 10' will be described but it should be noted that the described features may be applied on the second load carrying foot as well.

The second sensor G2 may be adapted to measure if the first load carrying foot 10 has been tightened hard enough i.e. is it attached to the roof (not shown in figure 2) with enough force. By enough force is hereby meant that the roof rack, and the load carrying bar 15, can carry the load positioned on the load carrying bar 15 while the vehicle is moving in a safe manner. The second sensor G2 may be pressure sensor or a strain gauge sensor
The third sensor G3 may be adapted to measure if the first load carrying foot 10 is positioned in the correct position, i.e. a false or true mount. It may provide a signal of whether the load carrying foot 10 is positioned on the roof of the vehicle and/or is the load carrying foot 10 is positioned on the correct location on the roof of the vehicle. The thrid sensor G3, preferably a strain gauge, may further act as a torque monitor providing feedback when correct force has been applied between clamp and roof. The sensor is preferably positioned at a flexing part of the clamp, e.g. a central part of the clamping plate.

The sensors may optionally be positioned between a load carrying bar and a load carrying foot, on one or more of the clamps or between one or more of the the clamps and the underside of the load carrying feet against the vehicle, e.g. inside or on a foot support pad.

The strain gauge sensor G1 generally operates by detecting the imparted strain to the load carrying bar 15 by detecting a change in electrical conductivity of the strain gauge which is proportional to the applied stress. The strain gauge can be adhered to the appropriate portion of the roof rack, e.g. load carrying bar 15 or a portion of the load carrying foot 10, preferably the grip member of the load carrying foot 10 although other portions are possible dependent on the desired property to measure. A suitable adhesive is cyanoacrylate such as 2-octyl cyanoacrylate, ethyl-2-cyanoacrylate, n-butyl cyanoacrylate or methyl 2-cyanoacrylate. Alternative adhesives are epoxy glues.

A strain gauge comprises a conducting wire laid in a serpentine pattern. When the strain gauge, and thus the conducting wire, is tensioned, the conducting wire is stretched and the cross sectional area is reduced increasing the resistance of the conducting wire. When the strain gauge, and thus the conducting wire, is compressed, the cross sectional area of the conducting wire is increased decreasing the resistance of the conducting wire.

The sensors of the roof rack can advantageously be calibrated dependent on the ambient temperature using dummy gauge technique. It has however been found to be advantageous to calibrate the sensors during the manufacturing stage as the sensors may be adapted to the specific material of the roof rack such as the material and the dimensions of the load carrying bar and the grip member of the load carrying foot for example. This can be done by using a suitable constantan alloy for example.

The strain gauges may be calibrated to detect when the vehicle attachment portion such as a first and a second load carrier foot, is properly secured to the vehicle. This can be done e.g. by recognizing a sufficient bending in the load carrying bar imparted by forces from the first and the second load carrier foot.

The strain gauges are more sensitive to specific directions, generally in the directions of the elongation of the conducting wire. In an embodiment, the load carrying bar 15 comprises at least two strain gauges, or at least two direction sensitive sensors, which are arranged to detect the strain perpendicular to each other.

The results from the sensors, or various sensor types, e.g. strain gauges and pressure gauges, can be used for a combined, improved parameter determination, e.g. weight. As an example, the pressure gauges in the load carrier feet and the strain gauge(s) in the load carrying bar may be used. For example one pressure sensor in each foot and one strain gauge in the load carrying bar.

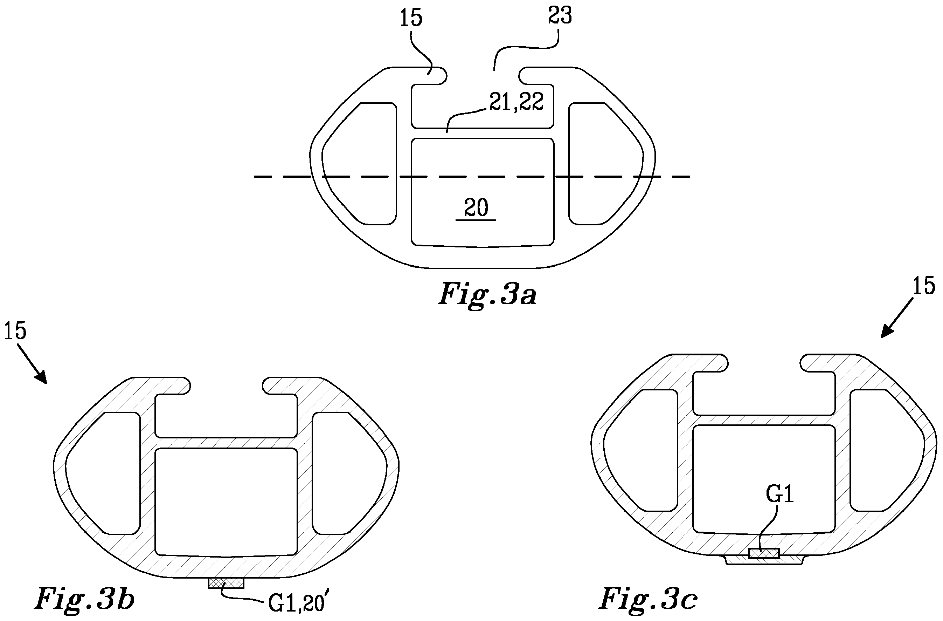

Figures 3a shows a cross section of a load carrying bar 15 according to an embodiment. As indicated in figure 3a, the first sensor G1 is positioned on the inside of the load carrying bar 15. There are however other possible positions such as on the bottom of an internal channel. The load carrying bar 15 is formed extruded aluminum but can be formed by other methods and/or materials. One way to easily attach the sensor G1 is by having a load carrying bar formed by two individual sections which are e.g. welded together. In figure 3a two such sections are schematically indicated by the dashed horizontal line.

The first sensor G1 is positioned along in interior surface 20. The interior surface 20 is in the shown embodiment the interior upper surface. A suitable surface is the interior surface which is closest to the load receiving surface of the load carrying bar 15. The upper interior surface 20 is formed by a partitioning wall 21 which forms the floor 22 of a groove 23 extending along the length of the load carrying bar 15. The groove 23 is adapted to receive an attachment arrangement for e.g. a roof box or a bicycle carrier or the like. The sensor G1 may be positioned under the neutral plane of the load carrying bar 15, in figure 3a also indicated by the dashed line, preferably on the underside of the load carrying bar 15.

The groove 23 of the load carrying bar 15 may be provided with additional pressure sensors to determine if the attachment arrangement is adequately attached to the load carrying bar 15 or not, and/or to determine the pressure force value.

Figure 3b-3c shows different possible positions of a sensor. Optionally or additionally a sensor G1 may be positioned on the underside of the load carrying bar 15 as indicated by reference 20' in figure 3b. Figure 3c shows how the sensor G1 is integrated with the wall of the load carrying bar 15. In this embodiment, the sensor G1 is arranged inside of at least a portion of the wall of load carrying bar 15, and in the shown embodiment the wall which define the outer perimeter of the load carrying bar 15.
The strain gauges G1a-G1d are connected to the transmitter T1, and/or to an electronic control unit, ECU.

The third sensor G3 may be a strain or pressure gauge and is preferably adapted to detect the force by which the load carrier foot 10 is attached to the vehicle with.

Suitable sensors G1-G3 may be provided from Tekscan Inc. The Tekscan Inc. sensors are known per se and are described in greater detail in the published patents and patent applications; US2007234825 (A1), US2007235231 (A1), WO2006022892 (A1), WO2005068961 (A1), WO2004102144 (A2), US5905209 (A), US5989700. As alternative to a strain gauge, the first and/ or the second sensor G1, G2 may be a fiber optic sensor which measures the strain along an optical fiber.

The strain gauges, or sensors G1-G3 may be integrated with the crossbar 15 or attached as separate components to the load carrying bar 15. The sensors may be integrated with windspoilers for example. The pressure gauge may be integrated in the load carrier foot 10 for measuring tightening or tension of load carrier foot 10 to the load carrying bar 15 and/or to vehicle roof/rail/fix point; e.g. to ensure not too strong forces are imparted to on a sensitive vehicle roof for example.

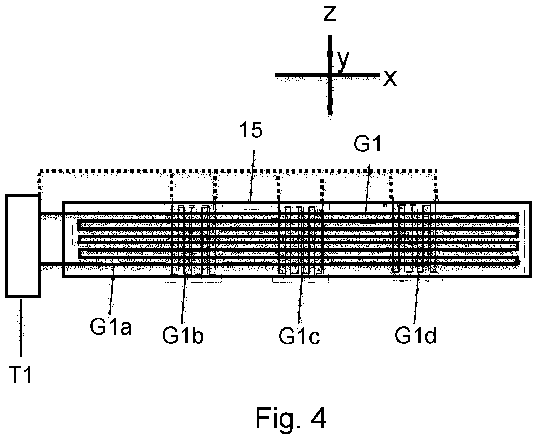

Figure 4 illustrates the layout of the sensor G1, in this case a strain gauge, to detect stress along two different directions; the length and the width of the load carrying bar 15. The axes are schematically indicated in figure 3b. The sensor G1, which in the shown embodiment is formed by four different strain gauges, has a main extension in the horizontal plane Z-X. A first strain gauge G1a is arranged to detect stress imparted to the load carrying bar 15 along the length of the load carrying bar 15, i.e. in the X direction. As can be seen it runs back and forth in a serpentine manner along the X axis and the length of the load carrying bar 15. The second, third and fourth strain gauges Gb-Gd are distributed along at an equal distance from each other along the length of the load carrying bar 15 but runs back and forth in the Z direction, i.e. along the width of the load carrying bar 15 and are arranged to detect stress imparted to the load carrying bar 15 along the width the load carrying bar 15. A typical such load is detected when a vehicle retardates or accelerates. The strain gauges G1-G3 may be adapted for temperature compensation; 4-block, a cross direction strain gauge may be used as reference. Other arrangement or positions of strain gauges, or sensors, are possible of course.

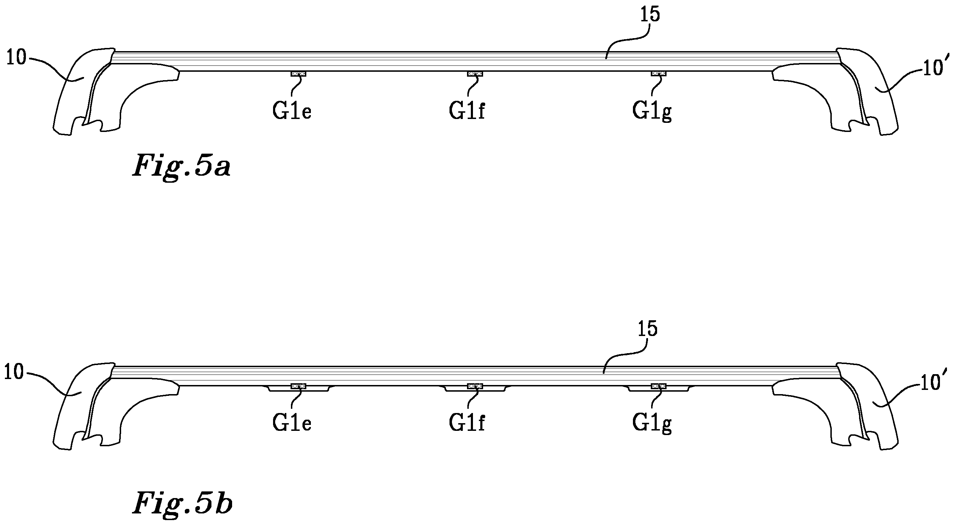

Figures 5a-5b shows a load carrying bar 15 comprising three sensors G1e-G1g, in this case three strain gauges. As can be noticed, strain gauges are located at a distance from each other; one in the middle and the other two closer to the first and the second load carrier feet. The strain gauges G1e-G1g may be oriented in the width direction or along the length of the load carrying bar 15. Optionally at least one is oriented along the width of the load carrying bar 15 and at least one is oriented along the length of the load carrying bar 15. The strain gauges G1e-G1g may communicate with a transmitter or any other suitable ECU as described above. It is possible of course that the load carrying bar 15 comprises only two sensors G1, e.g. two strain gauges, preferably positioned symmetrically on either side of the center point of the load carrying bar 15.

The sensors G1, G1e-G1g, may of course be arranged inside the load carrying bar or on the outside of the load carrying bar, or combinations thereof.

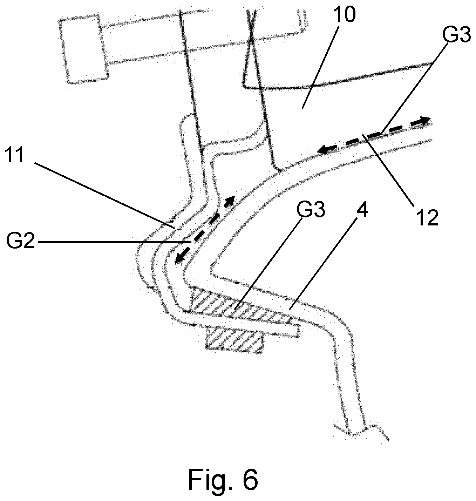

Figure 6 shows a portion of the load carrier foot 10 from figure 1 in greater detail. The grip member 11 may be provided with a second sensor G2, a strain gauge, as indicated with the dashed arrow. Additionally or optionally the grip member 11 may be provided with a third sensor G3, a pressure gauge, positioned between the grip member 11 and the ledge 4 on the vehicle and/or between the support surface 12 of the load carrier foot 10.

As is understood when reading the description, the at sensors could be used for proper alignment of e.g. a load carrying bar with respect to the vehicle e.g. along the vehicle front/back, or alert if a user position the rear load carrying bar and the associated load carrier feet, at the rear instead on at the front position, i.e. accidentally position the load carrier in an unintended position.

A vehicle manufacturer, accessory or roof rack manufacturer, may update calibration schemes, max allowed weight etc. on an external electronic device, or even on a processing unit, or memory unit, of the load carrier, e.g. over wireless communications network e.g. if new tests indicate that the load capacity was higher than originally communicated to the customers.

The at least one sensor can also be active during transport and alert a user if e.g. wind gusts influence the at least one sensor above a threshold value. As a response to surpassing such threshold value, it may recommend the user to slow down or stop the vehicle, or activate automated vehicle compensation.

The at least one sensor can be coupled to a memory unit for recording readings, e.g. as a flight recorder, this could assist to improve stability when studying accidents for example.

The measured values from the sensors may be used directly and displayed directly, or they may be manipulated. For example, the measured values may be compared with reference values, such as values from stored measurements, or with predetermined values. The measured values may be manipulated via an algorithm with calibration values, or directly compared with a calibration curve or the values representative of a calibration curve. The measured values may further be adjusted as a function of the ambient temperature.

## Claims

1. A load carrier for a vehicle (1), said load carrier comprising at least one vehicle attachment portion (10) and a load carrying portion (15), wherein said at least one vehicle attachment portion (10) and/or said load carrying portion (15) comprises at least one sensor (G1, G2, G3, G2', G3'), **characterized in that** said load carrier comprises a communication unit (T1, T2) being a wireless transmitter for communicating with an electronic device and said communication unit is configured to transmit and receive data to and from said electronic device, preferably for improved calibration of at least one sensor (G1, G2, G3, G2', G3'), wherein said electronic device is one or more electronic devices selected from the list of; a hand held electronic device (24) such as mobile phone, smart pad, lap top or the like, a desk top computer, a database server.

2. The load carrier according to claim 1, wherein said at least one vehicle attachment portion (10) is at least one load carrier foot (10) and/or wherein said load carrying portion (15) is a load carrying bar (15).

3. The load carrier according to any one of the preceding claims, wherein said load carrier comprises a processing unit for processing a received signal from said at least one sensor(s) or from an electronic device communicating with said load carrier.

4. The load carrier according to any one of the preceding claims, wherein said at least one sensor is at least one sensor selected from the list of; a strain gauge sensor, a magneto elastic sensor, a pressure sensor, a temperature sensor, accelerometer, lock sensor, accessory attachment sensor.

5. The load carrier according to any one of the preceding claims, wherein when said load carrying portion is a load carrying bar (15), said at least one sensor (G1) of said load carrying portion is arranged inside or on the underside of said load carrying bar (15), preferably said at least one sensor (G1) of said load carrying bar (15) is arranged on an interior surface (20) of said load carrying bar (15).

6. The load carrier according to any one of the preceding claims, wherein said load carrying portion comprises at least two strain gauges (G1a-G1g), preferably equally distributed along the load carrying portion, or more preferably three strain gauges (G1a-G1g), preferably with one positioned substantially in the middle of the load carrying portion, and the remaining two on either side of the middle strain gauge.

7. The load carrier according to any one of the preceding claims, wherein said load carrying portion (15) and/or said vehicle attachment portion (10) comprises two or more sensors (G1, G2, G3, G2', G3'), preferably three or more sensors (G1, G2, G3, G2', G3').

8. The load carrier according to any one of the preceding claims, wherein at least one sensor (G1, G2, G3, G2', G3') is adapted to be calibrated, said calibration is preferably done as a function of temperature and/or with respect to said vehicle attachment portion.

9. The load carrier according to any one of the preceding claims, wherein said at least one sensor (G1, G2, G3, G2', G3') of said load carrying portion and/or said vehicle attachment portion, may be reset by a user.

10. The load carrier according to any one of the preceding claims, wherein said vehicle attachment portion is a first and a second load carrier foot (10, 10'), and said load carrying portion is a load carrying bar (15), said load carrier further comprising a processing unit, a communication unit, and a hand held electronic device adapted to communicate with said load carrier.

11. The load carrier according to any one of the preceding claims, wherein said load carrying portion is a load carrying bar (15), said load carrying bar (15) comprising at least one designated channel or cut out for said at least one sensor (G1, G2, G3, G2', G3'), preferably said designated channel or cut out being adapted to receive a support strip comprising a plurality of sensors.

12. A set of a first and a second load carrier according to any one of the preceding claims, wherein said load carrier comprises a processing unit and a transmitter, said second load carrier is a slave load carrier to said first load carrier.

13. A set of a first and a second load carrier according to any one of the preceding claims, wherein said load carrier comprises a processing unit and a transmitter, said second load carrier may communicate directly, or via a network, with an external electronic device.

## Patentansprüche

1. Lastträger für ein Fahrzeug (1), wobei der Lastträger mindestens einen Fahrzeugbefestigungsabschnitt (10) und einen Lasttragabschnitt (15) umfasst, wobei der mindestens eine Fahrzeugbefestigungsabschnitt (10) und/oder der Lasttragabschnitt (15) mindestens einen Sensor (G1, G2, G3, G2', G3') umfasst, **dadurch gekennzeichnet, dass** der Lastträger eine Datenübertragungseinheit (T1, T2), die ein Drahtlossender ist, zum Austauschen von Daten mit einer elektronischen Einrichtung umfasst und die Datenübertragungseinheit so eingerichtet ist, dass sie Daten an die elektronische Einrichtung überträgt und von ihr empfängt, vorzugsweise für eine verbesserte Kalibrierung von mindestens einem Sensor (G1, G2, G3, G2', G3'), wobei die elektronische Einrichtung eine oder mehrere elektronische Einrichtungen ist, die ausgewählt sind aus folgender Liste: eine tragbare elektronische Einrichtung (24) wie ein Mobiltelefon, Tablet, Laptop oder Ähnliches, ein Desktop-Computer, ein Datenbankserver.

2. Lastträger nach Anspruch 1, wobei der mindestens eine Fahrzeugbefestigungsabschnitt (10) mindestens ein Lastträgerfuß (10) ist und/oder wobei der Lasttragabschnitt (15) eine Lastträgerstange (15) ist.

3. Lastträger nach einem der vorhergehenden Ansprüche, wobei der Lastträger eine Verarbeitungseinheit zum Verarbeiten eines Signals umfasst, das sie von dem mindestens einen Sensor oder von einer elektronischen Einrichtung, die mit dem Lastträger Daten austauscht, empfängt.

4. Lastträger nach einem der vorhergehenden Ansprüche, wobei der mindestens eine Sensor mindestens ein Sensor ist, der aus folgender Liste ausgewählt ist: ein Dehnungsmessstreifen-Sensor, ein magnetoelastischen Sensor, ein Drucksensor, ein Temperatursensor, Beschleunigungsmesser, Verriegelungssensor, Zubehörbefestigungssensor.

5. Lastträger nach einem der vorhergehenden Ansprüche, wobei, wenn der Lasttragabschnitt eine Lastträgerstange (15) ist, der mindestens eine Sensor (G1) des Lasttragabschnitts in der oder an der Unterseite der Lastträgerstange (15) angeordnet ist, wobei vorzugsweise der mindestens eine Sensor (G1) der Lastträgerstange (15) an einer Innenfläche (20) der Lastträgerstange (15) angeordnet ist.

6. Lastträger nach einem der vorhergehenden Ansprüche, wobei der Lasttragabschnitt mindestens zwei Dehnungsmessstreifen (G1a-G1g) umfasst, die vorzugsweise gleichmäßig den Lasttragabschnitt entlang verteilt sind, oder bevorzugter drei Dehnungsmessstreifen (G1a-G1g), wobei vorzugsweise einer im Wesentlichen in der Mitte des Lasttragabschnitts und die übrigen beiden auf jeder Seite des mittleren Dehnungsmessstreifens platziert ist bzw. sind.

7. Lastträger nach einem der vorhergehenden Ansprüche, wobei der Lasttragabschnitt (15) und/oder der Fahrzeugbefestigungsabschnitt (10) zwei oder mehr Sensoren (G1, G2, G3, G2', G3'), vorzugsweise drei oder mehr Sensoren (G1, G2, G3, G2', G3') umfasst bzw. umfassen.

8. Lastträger nach einem der vorhergehenden Ansprüche, wobei mindestens ein Sensor (G1, G2, G3, G2', G3') so ausgelegt ist, dass er kalibriert werden kann, wobei die Kalibrierung vorzugsweise in Abhängigkeit von der Temperatur und/oder bezogen auf den Fahrzeugbefestigungsabschnitt erfolgt.

9. Lastträger nach einem der vorhergehenden Ansprüche, wobei der mindestens eine Sensor (G1, G2, G3, G2', G3') des Lasttragabaschnitts und/oder des Fahrzeugbefestigungsabschnitts von einem Benutzer zurückgesetzt werden kann.

10. Lastträger nach einem der vorhergehenden Ansprüche, wobei der Fahrzeugbefestigungsabschnitt ein erster und ein zweiter Lastträgerfuß (10, 10') ist und der Lasttragabschnitt eine Lastträgerstange (15) ist, wobei der Lastträger ferner eine Verarbeitungseinheit, eine Datenübertragungseinheit und eine tragbare elektronische Einrichtung umfasst, die so ausgelegt ist, dass sie mit dem Lastträger Daten austauscht.

11. Lastträger nach einem der vorhergehenden Ansprüche, wobei der Lasttragabschnitt eine Lastträgerstange (15) ist, die Lastträgerstange (15) mindestens einen speziell angefertigten Kanal oder Ausschnitt für den mindestens einen Sensor (G1, G2, G3, G2', G3') umfasst, wobei der speziell angefertigte Kanal oder Ausschnitt so ausgelegt ist, dass er einen Trägerstreifen mit einer Vielzahl von Sensoren aufnimmt.

12. Satz aus einem ersten und einem zweiten Lastträger nach einem der vorhergehenden Ansprüche, wobei der Lastträger eine Verarbeitungseinheit und einen Sender umfasst, der zweite Lastträger ein untergeordneter Lastträger zu dem ersten Lastträger ist.

13. Satz aus einem ersten und einem zweiten Lastträger nach einem der vorhergehenden Ansprüche, wobei der Lastträger eine Verarbeitungseinheit und einen Sender umfasst, der zweite Lastträger direkt oder über ein Netz mit einer externen elektronischen Einrichtung Daten austauschen kann.

## Revendications

1. Porte-charge destiné à un véhicule (1), ledit porte-charge comprenant au moins une partie de fixation au véhicule (10) et une partie de support de charge (15), dans lequel ladite au moins une partie de fixation au véhicule (10) et/ou ladite partie de support de charge (15) comprend au moins un capteur (G1, G2, G3, G2', G3'), **caractérisé en ce que** ledit porte-charge comprend une unité de communication (T1, T2) consistant en un émetteur sans fil et destinée à communiquer avec un appareil électronique et ladite unité de communication est conçue pour émettre et recevoir des données à destination ou en provenance dudit appareil électronique, de préférence pour un étalonnage amélioré d'au moins un capteur (G1, G2, G3, G2', G3'), ledit appareil électronique pouvant consister en un ou plusieurs appareils électroniques choisis parmi les suivants : un appareil électronique portatif (24) tel qu'un téléphone mobile, une tablette, un ordinateur portable ou dispositifs similaires, un ordinateur de bureau, un serveur de base de données.

2. Porte-charge selon la revendication 1, dans lequel ladite au moins une partie de fixation au véhicule (10) consiste en au moins un pied de support de charge (10) et/ou dans lequel ladite partie de support de charge (15) consiste en une barre de support de charge (15).

3. Porte-charge selon l'une quelconque des revendications précédentes, dans lequel ledit porte-charge comprend une unité de traitement visant à traiter un signal reçu en provenance dudit au moins un capteur ou d'un appareil électronique communiquant avec ledit porte-charge.

4. Porte-charge selon l'une quelconque des revendications précédentes, dans lequel ledit au moins un capteur consiste en au moins un capteur choisi parmi les suivants : un extensomètre, un capteur magnétoélastique, un capteur de pression, un capteur de température, un accéléromètre, un capteur de verrouillage, un capteur de fixation d'accessoire.

5. Porte-charge selon l'une quelconque des revendications précédentes, dans lequel, lorsque ladite partie de support de charge consiste en une barre de support de charge (15), ledit au moins un capteur (G1) de ladite partie de support de charge est agencé à l'intérieur ou sur la face inférieure de ladite barre de support de charge (15), ledit au moins un capteur (G1) de ladite barre de support de charge (15) étant de préférence agencé sur une surface intérieure (20) de ladite barre de support de charge (15).

6. Porte-charge selon l'une quelconque des revendications précédentes, dans lequel ladite partie de support de charge comprend au moins deux extensomètres (G1a-G1g), de préférence repartis de manière égale le long de la partie de support de charge ou, de manière plus préférable, trois extensomètres (G1a-G1g), dont un est de préférence disposé sensiblement au milieu de la partie de support de charge, et les deux restants de chaque côté de l'extensomètre du milieu.

7. Porte-charge selon l'une quelconque des revendications précédentes, dans lequel ladite partie de support de charge (15) et/ou ladite partie de fixation au véhicule (10) comprennent au moins deux capteurs (G1, G2, G3, G2', G3'), de préférence au moins trois capteurs (G1, G2, G3, G2', G3').

8. Porte-charge selon l'une quelconque des revendications précédentes, dans lequel au moins un capteur (G1, G2, G3, G2', G3') est apte à être étalonné, ledit étalonnage s'effectuant de préférence en fonction de la température et/ou compte tenu de ladite partie de fixation au véhicule.

9. Porte-charge selon l'une quelconque des revendications précédentes, dans lequel ledit au moins un capteur (G1, G2, G3, G2', G3') de ladite partie de support de charge et/ou de ladite partie de fixation au véhicule peut être réinitialisé par un utilisateur.

10. Porte-charge selon l'une quelconque des revendications précédentes, dans lequel ladite partie de fixation au véhicule consiste en un premier et un second pied de support de charge (10, 10'), et ladite partie de support de charge consiste en une barre de support de charge (15), ledit porte-charge comprenant en outre une unité de traitement, une unité de communication, et un appareil électronique portatif apte à communiquer avec ledit porte-charge.

11. Porte-charge selon l'une quelconque des revendications précédentes, dans lequel ladite partie de support de charge consiste en une barre de support de charge (15), ladite barre de support de charge (15) comprenant au moins une rigole ou un évidement spécifique pour ledit au moins un capteur (G1, G2, G3, G2', G3'), ladite rigole ou ledit évidement spécifique étant de préférence apte à recevoir une barrette de support comprenant une pluralité de capteurs.

12. Ensemble constitué d'un premier et d'un second porte-charge selon l'une quelconque des revendications précédentes, dans lequel ledit porte-charge comprend une unité de traitement et un émetteur, ledit second porte-charge étant un porte-charge esclave dudit premier porte-charge.

13. Ensemble constitué d'un premier et d'un second porte-charge selon l'une quelconque des revendications précédentes, dans lequel ledit porte-charge comprend une unité de traitement et un émetteur, ledit second porte-charge pouvant communiquer directement, ou par le biais d'un réseau, avec un appareil électronique externe.
